# EUROPEAN PATENT APPLICATION

(11) **EP 4 527 487 A1**
(43) Date of publication of application: **26.03.2025**
(21) Application number: 23757182.3
(22) Date of filing: 19.05.2023
(51) Int. Cl.: B01D 53/62, B01D 53/78

(54) **METHOD AND DEVICE FOR PRODUCING AMMONIUM BICARBONATE USING AMMONIA-BASED DECARBURIZATION SYSTEM**

(30) Priority: 20.05.2022 CN 202210553353
(71) Applicant: Jiangnan Environmental Protection Group Inc., KY1-1002 Grand Cayman (KY)
(72) Inventor: ZHANG, Jun, Jiangsu 211100 (CN); WANG, Jinyong, Jiangsu 211100 (CN); QI, Lifang, Jiangsu 211100 (CN); LUO, Jing, Jiangsu 211100 (CN)
(74) Representative: Bottero, Carlo
(86) International application number: PCT/CN2023/095168
(87) International publication number: WO 2023/222101

(57) **Abstract**

Apparatus and method for producing ammonium bicarbonate in an ammonia-based decarbonization system are provided. The apparatus comprises a cooling function zone operable to cool a process gas; an ammonium bicarbonate generation zone operable to generate ammonium bicarbonate; a carbon dioxide absorption zone operable to absorb, via multi-stage absorption, carbon dioxide from the process gas; and an ammonia removal function zone operable to remove ammonia from a decarbonized process gas, wherein absorbent ammonia for carbon dioxide removal is mainly added into the carbon dioxide absorption zone. Through zone control of ammonium bicarbonate generation, CO₂ absorption and ammonia removal, the efficiency of decarbonization absorption may be improved, and ammonia escape may be reduced. Meanwhile, carbon dioxide in flue gas can be utilized for producing ammonium bicarbonate as a nitrogen fertilizer.

## Description

### CROSS REFERENCE TO RELATED APPLICATION

This application claims priority to and the benefit of Chinese patent application No. 202210553353.9 filed on May 20, 2022, the disclosure of which is incorporated herein by reference in its entirety.

### TECHNICAL FIELD

This application relates to environmental protection. Specifically, this application relates to a method and apparatus for producing ammonium bicarbonate in an ammonia-based decarbonization system.

### BACKGROUND

At present, the efficiency of waste gas treatment in various industrial enterprises is generally low, or the waste gas is discharged into the atmosphere only after desulfurization and dust removal treatment, so that a large amount of greenhouse gas such as CO₂ is discharged into the environment, resulting in a series of environmental problems such as acceleration of global climate warming. Therefore, it is one of the urgent problems for all countries to find a positive and effective CO₂ gas treatment method. Ammonium bicarbonate is a quick-acting nitrogen fertilizer with a molecular formula of NH₄HCO₃, which is easily soluble in water, easily decomposable, and applicable to various crops and various soils. Carbon dioxide is one of the raw materials for preparing ammonium bicarbonate. By processing the CO₂ gas in the waste gas of industrial enterprises into ammonium bicarbonate, not only can the problem of directly discharging CO₂ into the atmosphere be reduced or eliminated, but also ammonium bicarbonate fertilizers can be prepared.

Patent application CN201010125082.4 discloses a production method for synthesizing ammonium bicarbonate fertilizers using CO₂ waste gas. A process of generating ammonium bicarbonate through countercurrent contact between CO₂ waste gas after dust removal and desulfurization of tail gas and concentrated ammonia water is used, ammonia gas in the previous procedure is recovered via an ammonia recovery tower, and the remaining tail gas is directly discharged to the atmosphere. In the process, ammonium bicarbonate can be generated by countercurrent contact between concentrated ammonia water and CO₂-containing gas for absorption, but because the temperature is not lowered, zone control on ammonium bicarbonate generation and CO₂ absorption is not performed in principle, the absorption efficiency is low, and the ammonia escape is high.

### SUMMARY OF THE INVENTION

In order to overcome the problems of low absorption efficiency and serious ammonia escape suffered by the existing ammonia-based decarbonization systems and effectively to increase the production of by-product ammonium bicarbonate, the inventors have conducted diligent research. As a result, it has been found that high absorption efficiency and effective ammonia escape control of the ammonia-based decarbonization process and the increase in the ammonium bicarbonate production can be achieved by providing multiple functional zones and zone controlling of ammonium bicarbonate generation, CO₂ absorption and ammonia removal. Accordingly, the invention has been made.

Thus, an object of the present invention is to provide an apparatus for producing ammonium bicarbonate in an ammonia-based decarbonization system, the apparatus comprising:
a cooling function zone operable to cool a process gas;
an ammonium bicarbonate generation zone operable to generate ammonium bicarbonate;
a carbon dioxide absorption zone operable to absorb, via multi-stage absorption, carbon dioxide from the process gas; and
an ammonia removal function zone operable to remove ammonia from a decarbonized process gas;
wherein absorbent ammonia for carbon dioxide removal is mainly added into the carbon dioxide absorption zone.

A further object of the present invention is to provide a method for producing ammonium bicarbonate in an ammonia-based decarbonization system, the method comprising:
receiving a desulfurized process gas;
causing the desulfurized process gas to flow, in sequence, through:
   a cooling function zone configured to cool a process gas;
   an ammonium bicarbonate generation zone configured to generate an ammonium bicarbonate solution/slurry;
   a multi-stage carbon dioxide absorption zone configured to absorb carbon dioxide in the desulfurized process gas; and
   an ammonia removal function zone configured to remove ammonia in a decarbonized process gas;
wherein absorbent ammonia for carbon dioxide removal is mainly added into the carbon dioxide absorption zone.

### BRIEF DESCRIPTION OF THE DRAWINGS

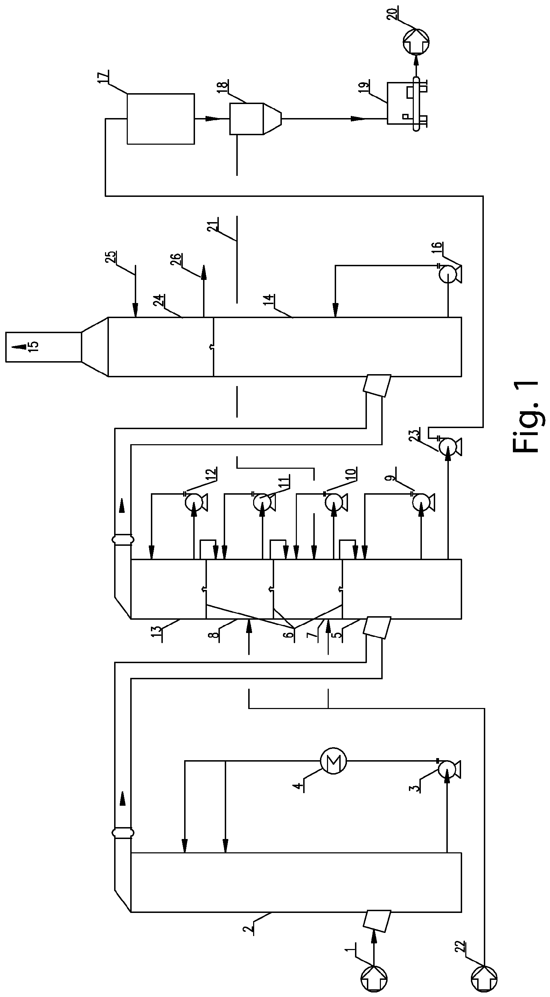

FIG. 1 is a schematic flowchart of a apparatus/method according to some embodiments of the invention.

In FIG. 1, the reference numerals have the following meanings: 1. process gas; 2. cooling function zone; 3. cooling circulating pump; 4. heat exchanger; 5. ammonium bicarbonate generation zone; 6. liquid collector; 7. first-stage carbon dioxide absorption zone; 8. second-stage carbon dioxide absorption zone; 9. ammonium bicarbonate generation zone circulating pump; 10. first-stage carbon dioxide absorption zone circulating pump; 11. second-stage carbon dioxide absorption zone circulating pump; 12. third-stage carbon dioxide absorption zone circulating pump; 13. third-stage carbon dioxide absorption zone; 14. ammonia removal function zone water-washing section; 15. decarbonized gas; 16. ammonia removal function zone water-washing circulating pump; 17. ammonium bicarbonate crystallizer; 18. solid-liquid separator; 19. packing machine; 20. solid ammonium bicarbonate; 21. mother liquid return pipe; 22. ammonia; 23. ammonium bicarbonate discharge pump; 24. ammonia removal function zone acid-washing section; 25. ammonium sulfate solution from ammonia-based desulfurization; 26. solution returning to ammonia-based desulfurization.

### DETAILED DESCRIPTION OF PREFERRED EMBODIMENTS

In a first aspect, the disclosure provides an apparatus for producing ammonium bicarbonate in an ammonia-based decarbonization system, the apparatus comprising a cooling function zone operable to cool a process gas; an ammonium bicarbonate generation zone operable to generate ammonium bicarbonate; a carbon dioxide absorption zone operable to absorb, via multi-stage absorption, carbon dioxide from the process gas; and an ammonia removal function zone operable to remove ammonia from a decarbonized process gas, wherein absorbent ammonia for carbon dioxide removal is mainly added into the carbon dioxide absorption zone.

As used herein, the expression "absorbent ammonia for carbon dioxide removal is mainly added into the carbon dioxide absorption zone" means that greater than 60 wt%, for example greater than 65 wt%, for example greater than 80 wt%, for example greater than 90 wt%, for example greater than 98 wt%, or for example 100 wt% of the total absorbent ammonia used for carbon dioxide removal in the method/apparatus of the disclosure is introduced into the carbon dioxide absorption zone and/or is fed into a stream to the carbon dioxide absorption zone.

In some embodiments, an amount of ammonia added into the ammonium bicarbonate generation zone is lower than that added into a first-stage of the carbon dioxide absorption zone immediately next to the ammonium bicarbonate generation zone, or no ammonia is added into the ammonium bicarbonate generation zone.

In some embodiments, an amount of ammonia added into a first-stage of the carbon dioxide absorption zone immediately next to the ammonium bicarbonate generation zone is lower than that added into other stage(s) of the carbon dioxide absorption zone, or no ammonia is added into the first-stage of the carbon dioxide absorption zone. Preferably, the amount of ammonia added into the first-stage of the carbon dioxide absorption zone immediately next to the ammonium bicarbonate generation zone is lower than 20% of the total amount of the ammonia added in the method.

In some embodiments, an amount of ammonia added into a last-stage of the carbon dioxide absorption zone is lower than that added into a previous stage of the carbon dioxide absorption zone, or no ammonia is added into the last-stage of the carbon dioxide absorption zone. Preferably, the amount of ammonia added into the last-stage of the carbon dioxide absorption zone is 80 wt% or less, e.g., 50 wt% or less, e.g., 30 wt% or less, of that added into the previous stage of the carbon dioxide absorption zone.

In some embodiments, solid ammonium bicarbonate is produced from the ammonium bicarbonate generated in the ammonium bicarbonate generation zone by a post-treatment system, and ammonium bicarbonate mother liquid is returned to the first-stage carbon dioxide absorption zone immediately next to the ammonium bicarbonate generation zone.

In some embodiments, the cooling function zone, the ammonium bicarbonate generation zone, the carbon dioxide absorption zone, and the ammonia removal function zone may be combined into one or more towers, and a device/component that allows gas to pass through is disposed between the function zones.

In a second aspect, the disclosure provides a method for producing ammonium bicarbonate in an ammonia-based decarbonization system, the method comprising:
receiving a desulfurized process gas;
causing the desulfurized process gas to flow, in sequence, through:
   a cooling function zone configured to cool the desulfurized process gas;
   an ammonium bicarbonate generation zone configured to generate an ammonium bicarbonate solution/slurry;
   a multi-stage carbon dioxide absorption zone configured to absorb carbon dioxide in the desulfurized process gas; and
   an ammonia removal function zone configured to remove ammonia in a decarbonized process gas;
wherein absorbent ammonia for carbon dioxide removal is mainly added into the carbon dioxide absorption zone.

In some embodiments of the method, an amount of ammonia added into a first-stage of the carbon dioxide absorption zone immediately next to the ammonium bicarbonate generation zone is lower than that added into other stage(s) of the carbon dioxide absorption zone, or no ammonia is added into the first-stage of the carbon dioxide absorption zone. Preferably, the amount of ammonia added into the first-stage of the carbon dioxide absorption zone immediately next to the ammonium bicarbonate generation zone is lower than 20% of the total amount of the ammonia added in the method.

In some embodiments of the method, an amount of ammonia added into a last-stage of the carbon dioxide absorption zone is lower than that added into a previous stage of the carbon dioxide absorption zone, or no ammonia is added into the last-stage of the carbon dioxide absorption zone. Preferably, the amount of ammonia added into the last-stage of the carbon dioxide absorption zone is 80 wt% or less, e.g., 50 wt% or less, e.g., 30 wt% or less, of that added into the previous stage of the carbon dioxide absorption zone.

In some embodiments of the method, solid ammonium bicarbonate is produced from the ammonium bicarbonate generated in the ammonium bicarbonate generation zone by a post-treatment system, and ammonium bicarbonate mother liquid is returned to the first-stage absorption zone immediately next to the ammonium bicarbonate generation zone.

In some embodiments of the method, the cooling function zone cool the process gas to a temperature of 10-30 degrees Celsius.

In some embodiments of the method, the cooling function zone is provided with at least one layer of circulating liquid distributor.

In some embodiments of the method, the ammonium bicarbonate generation zone is provided with at least one layer of gas and liquid distributor. The gas and liquid distributor may be selected from the group consisting of bubble distributors, liquid distribution spray distributors, and combinations thereof.

In some embodiments of the method, the carbon dioxide absorption zone is provided with at least two or more layers of circulating liquid distributor.

In some embodiments of the method, the ammonia removal function zone is provided with at least one layer of circulating liquid distributor. The circulating liquid used in the ammonia removal function zone is preferably water or an acidic solution.

In some embodiments of the method, circulating liquid in a subsequent-stage, relative to the flow direction of the process gas, of the carbon dioxide absorption zone overflows to a previous-stage of the carbon dioxide absorption zone; and circulating liquid in a first-stage of the carbon dioxide absorption zone overflows to the ammonium bicarbonate generation zone.

As those skilled in the art can understand, water can be used as a medium of the individual circulating liquids/spraying liquids in the method.

An illustrative embodiment of the apparatus/method in accordance to the principle of the disclosure is described below with reference to the accompanying drawings, which constitute a part of the disclosure. CO₂-containing process gas 1 after ammonia-based desulfurization first enters a cooling function zone 2, where the gas is brought into countercurrent contact with a circulating liquid for cooling, and the circulating liquid is circulated by a cooling circulating pump 3 and cooled by a heat exchanger 4.

The cooled gas enters an ammonium bicarbonate generation zone 5, where the gas is brought into countercurrent contact with a circulating liquid for reaction to generate ammonium bicarbonate, and the circulating liquid is circulated by a circulating pump 9. The process gas leaving the ammonium bicarbonate generation zone 5 enters a first-stage carbon dioxide absorption zone 7. The first-stage carbon dioxide absorption zone 7 is separated from the ammonium bicarbonate generation zone 5 by a liquid collector 6 allowing the passage of gas, and circulating liquid in the first-stage carbon dioxide absorption zone 7 flows to the ammonium bicarbonate generation zone 5.

In the first-stage carbon dioxide absorption zone 7, the gas is brought into countercurrent contact with the circulating liquid for reaction to generate ammonium carbonate or ammonium carbamate, and the circulating liquid is circulated by a circulating pump 10. The first-stage carbon dioxide absorption zone 7 is separated from a second-stage carbon dioxide absorption zone 8 by a liquid collector 6 allowing the passage of gas, and circulating liquid in the second-stage carbon dioxide absorption zone 8 flows to the first-stage carbon dioxide absorption zone 7. A mother liquid from the solid-liquid separation in an ammonium bicarbonate post-treatment system is returned to the first-stage carbon dioxide absorption zone 7.

The gas after passing through the first-stage carbon dioxide absorption zone 7 enters the second-stage carbon dioxide absorption zone 8, where the gas is brought into countercurrent contact with a circulating liquid for reaction to further generate ammonium carbonate or ammonium carbamate, and the circulating liquid is circulated by a circulating pump 11.

The gas after passing through the second-stage carbon dioxide absorption zone 8 enters a third-stage carbon dioxide absorption zone 13, where the gas is brought into countercurrent contact with a circulating liquid for reaction to further generate ammonium carbonate or ammonium carbamate, and the circulating liquid is circulated by a circulating pump 12.

Ammonia 22 is fed into the first-stage carbon dioxide absorption zone 7 and the second-stage carbon dioxide absorption zone 8 through a pipeline.

The gas after passing through the third-stage carbon dioxide absorption zone 13 for further treatment enters a water-washing ammonia removal function zone 14 and then an acid-washing ammonia removal function zone 24, where the gas is respectively brought into countercurrent contact with water and an acidic ammonium sulfate solution to absorb free ammonia, and the water is circulated by a circulating pump 16. The process gas 15 after ammonia removal is discharged, optionally after a further water-washing.

The circulating liquid in the ammonium bicarbonate generation zone 5 is pumped into an ammonium bicarbonate crystallizer 17 through an ammonium bicarbonate discharge pump 23, and then enters a solid-liquid separator 18. The resulting solids are delivered to a packing machine 19 to produce solid ammonium bicarbonate 20. The resulting mother liquid is returned to the first-stage carbon dioxide absorption zone 7.

### EXAMPLE 1

The apparatus as shown in FIG. 1 was used for Example 1. CO₂-containing process gas 1 first entered a cooling function zone 2, where the process gas was brought into countercurrent contact with a circulating liquid for cooling, and the circulating liquid was circulated by a cooling circulating pump 3 and cooled by a heat exchanger 4. The circulating liquid was water, and ingredients entrained by the process gas entered the circulating liquid during the circulation process so that the circulating liquid contained ingredients such as ammonium sulfate, a byproduct of previous ammonia-based desulfurization.

The gas cooled to 25°C entered an ammonium bicarbonate generation zone 5, where the process gas was brought into countercurrent contact with a circulating liquid for reaction to generate ammonium bicarbonate, and the circulating liquid was circulated by a circulating pump 9. The process gas leaving the ammonium bicarbonate generation zone 5 entered a first-stage carbon dioxide absorption zone 7, which was separated from the ammonium bicarbonate generation zone 5 by a liquid collector 6 allowing the passage of gas, and circulating liquid in the first-stage carbon dioxide absorption zone 7 flowed to the ammonium bicarbonate generation zone 5.

In the first-stage carbon dioxide absorption zone 7, the gas was brought into countercurrent contact with the circulating liquid for reaction to generate ammonium carbonate or ammonium carbamate, and the circulating liquid was circulated by a circulating pump 10. The first-stage carbon dioxide absorption zone 7 was separated from a second-stage carbon dioxide absorption zone 8 by a liquid collector 6 allowing the passage of gas, and circulating liquid in the second-stage carbon dioxide absorption zone 8 flowed to the first-stage carbon dioxide absorption zone 7. A mother liquid from the solid-liquid separation in an ammonium bicarbonate post-treatment system was returned to the first-stage carbon dioxide absorption zone 7.

The gas after passing through the first-stage carbon dioxide absorption zone 7 entered the second-stage carbon dioxide absorption zone 8, where the gas was brought into countercurrent contact with a circulating liquid for reaction to further generate ammonium carbonate or ammonium carbamate, and the circulating liquid was circulated by a circulating pump 11.

The gas after passing through the second-stage carbon dioxide absorption zone 8 entered a third-stage carbon dioxide absorption zone 13, where the gas was brought into countercurrent contact with a circulating liquid for reaction to further generate ammonium carbonate or ammonium carbamate, and the circulating liquid was circulated by a circulating pump 12.

Ammonia 22 was fed into the first-stage carbon dioxide absorption zone 7 and the second-stage carbon dioxide absorption zone 8 through a pipeline. The amount of ammonia fed in the first-stage was 10wt%, and the amount of ammonia fed in the second stage was 90wt%.

The gas after passing through the third-stage carbon dioxide absorption zone 13 entered a water-washing ammonia removal function zone 14 and then an acid-washing ammonia removal function zone 24, where the gas was respectively brought into countercurrent contact with water and an ammonium sulfate solution to absorb free ammonia, and the water was circulated by a circulating pump 16. The process gas 15 after ammonia removal was discharged. The water-washing ammonia removal function zone 14 utilized water as a circulating liquid, and ingredients entrained in the process gas entered the circulating liquid during the circulation process so that the circulating liquid contained ingredients such as ammonium bicarbonate, a byproduct of previous ammonia-based decarbonization.

The circulating liquid in the ammonium bicarbonate generation zone 5 was pumped into an ammonium bicarbonate crystallizer 17 through an ammonium bicarbonate discharge pump 23, and then entered a solid-liquid separator 18. The resulting solids were delivered to a packing machine 19 to produce solid ammonium bicarbonate 20. The resulting mother liquid was returned to the first-stage carbon dioxide absorption zone 7.

The decarbonization used 99.6% liquid ammonia as an absorbent, and the parameters of the process gas 1 are shown in the following table:

| Number | Item | Value |
|---|---|---|
| 1 | Gas flow, Nm³/h | 88500 |
| 2 | Temperature, °C | 45 |
| 3 | SO₂ content, mg/Nm³ | 35 |
| 4 | CO₂ content, v% (volume-percent) | 12.0 |
| 5 | NH₃ content, ppm | 3 |

The parameters of the cooled flue gas are shown in the following table:

| Number | Item | Value |
|---|---|---|
| 1 | Gas flow, Nm³/h | 78710 |
| 2 | Temperature, °C | 18 |
| 3 | SO₂ content, mg/Nm³ | 35 |
| 4 | CO₂ content, v% | 13.5 |
| 5 | NH₃ content, ppm | 3 |

The main parameters after treatment by decarbonization absorption tower are shown in the following table:

| Number | Item | Value |
|---|---|---|
| 1 | Gas flow at outlet of decarbonization absorption tower, Nm³/h | 75333 |
| 2 | CO₂ content at outlet of decarbonization absorption tower, v% | 5.26 |
| 3 | NH₃ content at outlet of decarbonization absorption tower, ppm | 1000 |
| 4 | Decarbonization efficiency, % | 60 |
| 5 | Amount of byproduct ammonium bicarbonate, t/h | 22.5 |
| 6 | 99.6% liquid ammonia consumption, t/h | 4.86 |

The main parameters after treatment by ammonia washing tower are shown in the following table:

| Number | Item | Value |
|---|---|---|
| 1 | Gas flow at outlet of ammonia washing tower, Nm³/h | 77754 |
| 2 | CO₂ content at outlet of ammonia washing tower, v% | 5.26 |
| 3 | NH₃ content at outlet of ammonia washing tower, ppm | 10 |
| 4 | SO₂ content at outlet of ammonia washing tower, ppm | 5 |

### COMPARATIVE EXAMPLE 1

Compared with Example 1, only the ammonia addition manner was different. Ammonia was fed to the ammonium bicarbonate generation zone and the first-, second- and third-stage carbon dioxide absorption zones, and the amounts of the ammonia fed to the four stages were equivalent.

Since the amount of the ammonia fed to the ammonium bicarbonate generation zone reached 25%, it was difficult for the ammonium bicarbonate to generate in the solution and ammonium bicarbonate crystals were not obtained. The amount of the ammonia fed to the third-stage carbon dioxide absorption zone reached 25%, which greatly increased the ammonia escape from the carbon dioxide absorption zone (the concentration of the ammonia entrained in the process gas after treatment in the carbon dioxide absorption zone reached 6000 ppm). Accordingly, the subsequent water-washing ammonia removal function zone 14 and acid-washing ammonia removal function zone 24 had an increased ammonia removal load.

The main parameters of gas after decarbonization treatment are shown in the following table:

| Number | Item | Value |
|---|---|---|
| 1 | Gas flow at outlet of decarbonization absorption tower, Nm³/h | 77339 |
| 2 | CO₂ content at outlet of decarbonization absorption tower, v% | 8.11 |
| 3 | NH₃ content at outlet of decarbonization absorption tower, ppm | 6000 |
| 4 | SO₂ content at outlet of decarbonization absorption tower, mg/Nm³ | 5 |
| 5 | Decarbonization efficiency, % | 40 |
| 6 | Amount of byproduct ammonium bicarbonate, t/h | 15.0 |
| 7 | 99.6% liquid ammonia consumption, t/h | 3.59 |

## Claims

1. An apparatus for producing ammonium bicarbonate in an ammonia-based decarbonization system, the apparatus comprising:
a cooling function zone operable to cool a process gas;
an ammonium bicarbonate generation zone operable to generate ammonium bicarbonate;
a carbon dioxide absorption zone operable to absorb, via multi-stage absorption, carbon dioxide from the process gas; and
an ammonia removal function zone operable to remove ammonia from decarbonized process gas;
wherein absorbent ammonia for carbon dioxide removal is mainly added into the carbon dioxide absorption zone.

2. The apparatus of claim 1, having at least one of the following features:
- an amount of ammonia added into the ammonium bicarbonate generation zone is lower than that added into a first-stage of the carbon dioxide absorption zone immediately next to the ammonium bicarbonate generation zone, or no ammonia is added into the ammonium bicarbonate generation zone;
- an amount of ammonia added into a first-stage of the carbon dioxide absorption zone immediately next to the ammonium bicarbonate generation zone is lower than that added into other stage(s) of the carbon dioxide absorption zone, or no ammonia is added into the first-stage of the carbon dioxide absorption zone,
preferably the amount of ammonia added into the first-stage of the carbon dioxide absorption zone immediately next to the ammonium bicarbonate generation zone is lower than 20% of the total amount of the ammonia added, and
- an amount of ammonia added into a last-stage of the carbon dioxide absorption zone is lower than that added into a previous stage of the carbon dioxide absorption zone, or no ammonia is added into the last-stage of the carbon dioxide absorption zone.

3. The apparatus of claim 1, wherein solid ammonium bicarbonate is produced from the ammonium bicarbonate generated in the ammonium bicarbonate generation zone by a post-treatment system, and ammonium bicarbonate mother liquid is returned to a first-stage absorption zone immediately next to the ammonium bicarbonate generation zone.

4. The apparatus of claim 1, wherein the cooling function zone, the ammonium bicarbonate generation zone, the carbon dioxide absorption zone, and the ammonia removal function zone are combined into one or more towers, and a device/component that allows gas to pass through is disposed between the function zones.

5. A method for producing ammonium bicarbonate in an ammonia-based decarbonization system, the method comprising:
receiving a desulfurized process gas;
causing the desulfurized process gas to flow, in sequence, through:
a cooling function zone configured to cool the desulfurized process gas;
an ammonium bicarbonate generation zone configured to generate an ammonium bicarbonate solution/slurry;
a multi-stage carbon dioxide absorption zone configured to absorb carbon dioxide in the desulfurized process gas; and
an ammonia removal function zone configured to remove ammonia in a decarbonized process gas;
wherein absorbent ammonia for carbon dioxide removal is mainly added into the carbon dioxide absorption zone.

6. The method of claim 5, having at least one of the following features:
- an amount of ammonia added into the ammonium bicarbonate generation zone is lower than that added into a first-stage of the carbon dioxide absorption zone immediately next to the ammonium bicarbonate generation zone, or no ammonia is added into the ammonium bicarbonate generation zone;
- an amount of ammonia added into a first-stage of the carbon dioxide absorption zone immediately next to the ammonium bicarbonate generation zone is lower than that added into other stage(s) of the carbon dioxide absorption zone, or no ammonia is added into the first-stage of the carbon dioxide absorption zone,
preferably the amount of ammonia added into the first-stage of the carbon dioxide absorption zone immediately next to the ammonium bicarbonate generation zone is lower than 20% of the total amount of the ammonia added, and
- an amount of ammonia added into a last-stage of the carbon dioxide absorption zone is lower than that added into a previous stage of the carbon dioxide absorption zone, or no ammonia is added into the last-stage of the carbon dioxide absorption zone.

7. The method of claim 5, further comprising:
passing ammonium bicarbonate generated in the ammonium bicarbonate generation zone to a post-treatment system to produce solid ammonium bicarbonate; and
returning a resulting ammonium bicarbonate mother liquid to a first-stage absorption zone immediately next to the ammonium bicarbonate generation zone.

8. The method of claim 5, having at least one of the following features:
- the cooling function zone cools the process gas to 10-30°C;
- the cooling function zone is provided with at least one layer of circulating liquid distributor;
- the ammonium bicarbonate generation zone is provided with at least one layer of gas and liquid distributor, preferably the gas and liquid distributor is selected from the group consisting of bubble distributors, liquid distribution spray distributors, and combinations thereof;
- the carbon dioxide absorption zone is provided with at least one layer of circulating liquid distributor;
- the ammonia removal function zone is provided with at least one layer of circulating liquid distributor.

9. The method of claim 5, wherein circulating liquid in a subsequent-stage, relative to the flow direction of the process gas, of the carbon dioxide absorption zone flows to a previous-stage of the carbon dioxide absorption zone; and circulating liquid in a first-stage of the carbon dioxide absorption zone flows to the ammonium bicarbonate generation zone.
